# EUROPEAN PATENT APPLICATION

(11) **EP 4 414 972 A1**
(43) Date of publication of application: **14.08.2024**
(21) Application number: 22878011.0
(22) Date of filing: 19.09.2022
(51) Int. Cl.: G09F 15/02, B32B 5/02, A47G 1/00, D04H 1/40

(54) **BAND FOR JOINING A POLYESTER TEXTILE ATTACHED TO A FRAME AND METHOD FOR OBTAINING SAME**

(30) Priority: 08.10.2021 ES 202130947
(71) Applicant: Egaña Arrieta, Joseba, 20018 San Sebastián (Gipuzkoa) (ES)
(72) Inventor: GIRONÉS BERNABÉ, Sagrario, 03801 Alcoy (Alicante) (ES); FAGES SANTANA, Eduardo, 03801 Alcoy (Alicante) (ES); EGAÑA ARRIETA, Joseba, 20018 San Sebastián (Guipúzcoa) (ES)
(74) Representative: Ibarra Garcia, Isabel
(86) International application number: PCT/ES2022/070591
(87) International publication number: WO 2023/057667

(57) **Abstract**

The present invention relates to a band for joining a polyester textile, and to a method for obtaining same, wherein the textile has a printed design, such that the band provides a means for joining the textile and an attachment frame. Advantageously, the proposed band has the same composition as the textile, which facilitates the recycling of the assembly and enables the waste to be reused. For this purpose, the band is formed by a needle-punched nonwoven polyester fabric comprising polyester fibres and bicomponent polyester fibres and has a polyester film on at least one of the surfaces thereof. The claimed invention is of special interest for use in visual communication solutions, such as decorative panels or advertisements at points of sale, in retail, at events and at stands, among others.

## Description

### OBJECT OF THE INVENTION

The present invention relates to a band for joining a polyester textile and to a method for obtaining same, wherein the textile has a printed design, such that the band provides a means for joining the textile and an attachment frame. Specifically, the present invention is of special interest for use in visual communication solutions, such as decorative panels or advertisements at points of sale, in retail, at events and at stands, among others.

Advantageously, the proposed band has the same composition as the textile, which facilitates its recycling, offering an efficient waste management and enabling its reuse.

### BACKGROUND OF THE INVENTION

Visual communication solutions, such as decorative panels or advertisements made up of a canvas or textile printed with an image or advertising motif and linked to a support frame or framework, such that the textile is tautened on same, are known in the state of the art today.

These communication solutions are usually arranged at points of sale, shopping centres, events, stands at fairs, etc., therefore the advertisements or images that they, i.e., the textiles, contain are very frequently replaced.

Therefore, textiles of this type are produced in large quantities and, consequently, generate a high volume of waste, so the concern generated by the final storage of this waste is also significant, even more so as it is a short-lived material that will end up incinerated or buried in a landfill.

Generally, the frames on which the textiles containing the printed advertising or decorative image are supported are manufactured from aluminium profiles on which the printed textile pieces are attached through thick sheets of silicone or polyvinyl chloride (PVC) that are sewn to its outer edge, thereby providing the necessary tension to the fabric in order to be perfectly stretched, and sufficient mechanical properties to hold up throughout its service life. The main barrier found in terms of sustainability is that this silicone or PVC band cannot be recycled and is mechanically adhered to the textile, so despite being easy to separate the framework and the textile, this is not the case with the silicone band itself and the printed textile.

The anchoring system between the textile and the framework known today, consisting of a band of silicone or PVC polymeric material, means that, for practical purposes, the textile element cannot be recycled given that there is no economically viable separation technique to remove this band of polymeric material from the textile.

For this reason, the applicant for this patent detects the need to offer a novel band of textile composition with a composition similar to that of the printed textile, so that the entire assembly can be easily recycled, both mechanically and chemically.

### DESCRIPTION OF THE INVENTION

The present invention allows solving the aforementioned problems, since it offers a band made of a textile material, a substitute for the silicone or PVC band, that allows attaching the printed textile to the frame, providing a sustainable solution, since it can be easily recycled together with the printed textile, without having to separate both elements for this purpose.

Therefore, the proposed band is linked to the printed advertising textile or canvas, being inserted into a groove in the frame that serves as a support for the printed textile. Therefore, the band enables the printed textile to be tautened on the frame.

The development, object of the invention, therefore consists of a band of a textile nature, more specifically a nonwoven polyester fabric, made up of polyester fibres and bicomponent polyester fibres.

Specifically, the band comprises a needle-punched nonwoven polyester fabric having a polyester film on at least one of the surfaces thereof. The purpose of the polyester film is to provide the band with suitable roughness that facilitates its introduction into the groove of the frame or framework, making it adhesive or 'tacky'. In this way, the band is prevented from sliding out of the groove of the frame, which could cause the detachment of the printed textile.

The needle-punched nonwoven fabric of the band is made up of at least one web having a grammage of between 700 and 1000 g/m² and a thickness of between 3 mm and 5.5 mm, wherein the web is formed by polyester fibres and bicomponent polyester fibres, which have a core and a shell with a melting point less than that of the core, with the amount of bicomponent fibres present being between 2% and 50%, preferably 25%, of the total weight of the web, precursor of the nonwoven fabric forming the band.

The bicomponent polyester fibres have a polyester core with a conventional melting point and a polyester shell with a low melting point. Preferably, the core of the bicomponent polyester fibres has a melting point of 150ºC and the shell of the bicomponent polyester fibres a melting point of 110ºC. These melting points of the bicomponent polyester fibres are much lower than the melting point of conventional polyester fibres, which have a preferred melting point of 260ºC.

In terms of the nature of the different fibres, polyester fibres and biocomponent polyester fibres can be made of both virgin raw materials and recycled material derived from the reprocessing of pre- and post-consumer waste, such as regenerated textile fibre derived from the shredding or unweaving process of the printed advertising textiles or canvases.

The lengths of conventional polyester fibres (virgin or regenerated) making up the web preferably in the interval of 10 - 50 mm, whereas their fineness or linear density is in the interval of 2-7 dtex.

Preferably, the lengths of the bicomponent polyester fibres (virgin or regenerated) making up the web are in the interval of 38 - 64 mm, whereas their fineness or linear density is in the interval of 4 - 6 den.

These polyester fibres and bicomponent polyester fibres, regardless of their origin, will be processed by means of the carding-needle-punching technology.

Therefore, in order to obtain the band object of the present invention, the following method is preferably used:
- Carding the polyester fibres and bicomponent polyester fibres to obtain a web. In the carding process, the textile fibres or waste are arranged in parallel by cylinders covered with "combing teeth" (cards) which form anisotropic blankets, these blankets being able to be crossed in layers. The web, precursor of the non-woven fabric, is thereby obtained.
- Needle-punching (mechanically consolidating) at least one web of polyester fibres and bicomponent polyester fibres to obtain a nonwoven fabric.
- Moulding the nonwoven fabric by thermocompression, using a temperature of between 120ºC and 180ºC, a pressure of between 5 bar and 10 bars, and a speed of between 0.5 m/min and 15 m/min. The purpose of this step is to provide the band with rigidity and uniformity in terms of thickness suitable for its intended function. This step of the method is possible as a result of the presence of the bicomponent polyester fibres. Advantageously, the shell of the bicomponent polyester fibres contained in the nonwoven fabric melts, acting as a cohesive element for the assembly and allowing the material to be compressed and attached by heat until it reaches the requirements demanded of the band in terms of rigidity, flexibility and final thickness. Therefore, in a non-limiting preferred embodiment of the present invention, the bicomponent polyester fibres have a melting point of 110ºC for the shell and 150ºC for the core, whereas the polyester fibres have a melting point of about 260ºC. Preferably, this step of moulding by thermocompression is performed continuously using the lamination technology in a double-apron system, known as Flatbed Belt Lamination Technology.
- Laminating the nonwoven fabric using a polyester film which is arranged on at least one of the surfaces of the nonwoven fabric. Preferably, the polyester film is applied by continuously introducing the material into the lamination equipment from a thermoforming spool feeding system. The film is thus adhered to the surface of the nonwoven fabric, giving the resulting material a greater surface uniformity and a sufficient degree of adhesion which makes it easier for the printed advertising textile or canvas to remain taut once the band is inserted into the groove of the framework or frame. Preferably, the polyester film has a grammage of between 10 and 200 g/m², a thickness of between 10 and 200 µm and an activation temperature of between 120ºC and 170ºC. Advantageously, this activation temperature prevents the nonwoven fabric itself from melting when applying the film, since conventional polyester fibres have a much higher melting point than the polyester film. A flexible multilayer material consisting of a nonwoven fabric laminated with a film is thereby obtained, the entire assembly being advantageously made of polyester, facilitating the subsequent recycling thereof.
- Cutting the laminated nonwoven fabric into bands, with the desired length and width depending on the dimensions of the printed textile or canvas and on the dimensions of the frame. The nonwoven fabric is cut by means of a cutter, by means of temperature cutting or by means of a process of unwinding and continuously cutting with blades. However, the present invention is not limited to the mentioned cutting techniques. The laminated nonwoven fabric is cut to a preferred width of 15 mm, whereas the length of the band is in turn determined by the length of the reel of the thermoformed and laminated nonwoven fabric.

Finally and optionally, the method comprises a step of attaching the band to a polyester textile by means of sewing with a polyester thread or heat-sealing. Advantageously, the band obtained by means of the described method is perfectly applicable in the process of sewing or attaching by means of heat-sealing to the textile, since the nonwoven fabric hardly opens up after the cutting process as a result of the continuous thermoforming process that has been applied previously and of the presence of the bicomponent polyester fibres which act as a binder in the nonwoven fabric. The polyester film applied in the laminating step also contributes to stabilizing the edge of the band and to preventing it from deforming after the cutting operation.

Optionally, the polyester film laminated on one of the surfaces of the band is personalised with a printed motif, such that the company logo appears on the visible face once it is attached to the printed textile or textile canvas. For this purpose, the proposed method includes some of the following optional non-limiting steps:
- Personalisation by means of printing on the polyester film with UV ink before laminating the nonwoven fabric with the polyester film.
- Personalisation by means of transfer printing with polyester sublimation inks before laminating the nonwoven fabric with the polyester film.

Alternatively, in another embodiment of the invention, the steps of moulding by thermocompression, laminating, and transfer printing with sublimation inks of the polyester film are performed simultaneously. For this purpose, it would be necessary to introduce in the lamination equipment or laminator a piece of transfer paper with the printed personalisation motif, the polyester film and the nonwoven fabric.

In short, the band of the present invention provides a sustainable and easily recyclable product, since the band, the textile to which it is attached and the thread used for sewing same are all made of the same material or material of the same nature.

Therefore, the assembly of the system could be recycled mechanically (shredding or melting) or chemically.

In the case of opting for a mechanical recycling method based on shredding the material, the resulting regenerated fibre or fluff is applicable as raw material for manufacturing a new nonwoven fabric, which in turn is a precursor of a new band. A circular economy model applied within the production process of advertising textiles or canvases is thereby defined.

Moreover, in the case of opting for recycling through melting, the resulting material would be polyester-based chippings that could be applied as raw material in an injection moulding or extrusion moulding process to manufacture, among others, an alternative frame, and therefore more sustainable than the aluminium frames used today.

### BRIEF DESCRIPTION OF THE DRAWINGS

To complete the description that will be made below and for the purpose of helping to better understand the features of the invention according to a preferred practical embodiment thereof, a set of drawings is attached as an integral part of said description in which the following is depicted in an illustrative and non-limiting character:
Figure 1 shows a partial perspective view of the band according to a preferred embodiment of the present invention.
Figure 2 shows a detail of a printed textile having two bands sewn thereto according to the preferred embodiment illustrated in Figure 1.
Figure 3 shows a detail of a frame with a printed textile and the bands of the invention of the preceding figures, in which the textile has been depicted partially extracted from the frame.
Figure 4 shows two cross-section views of the frame, in which the assembly of the printed textile and the band before and after the insertion thereof into the groove of the frame can be seen.
Figure 5 shows a detailed perspective view of the placement of the printed textile with the bands of the invention in the groove of the frame.

### PREFERRED EMBODIMENT OF THE INVENTION

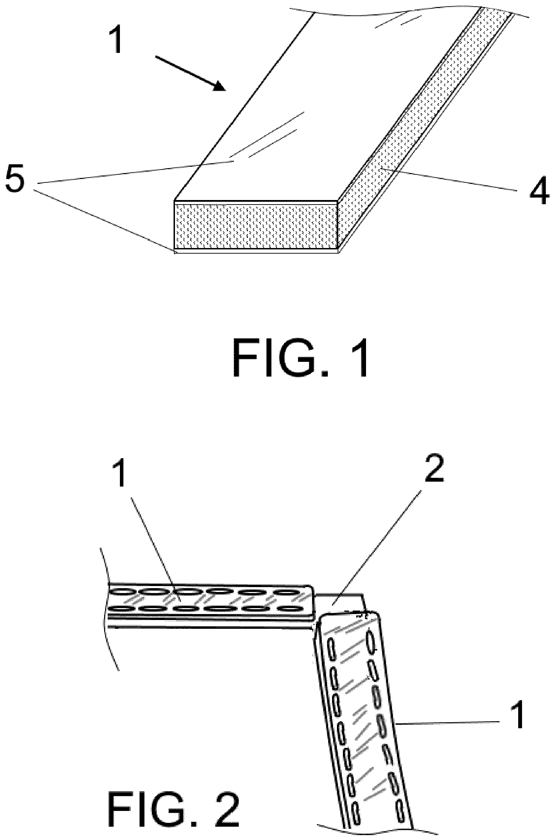

In view of the mentioned figures, it can be seen that the band (1) for joining a polyester textile (2) which is attached to a frame (3) comprises a needle-punched polyester nonwoven fabric (4) having a polyester film (5) on both surfaces or faces of the band (1), as can be seen in detail in the embodiment illustrated in Figure 1.

In a preferred embodiment of the invention, the nonwoven fabric is made up of at least one web which contains regenerated recycled polyester fibres (r-Pes) and 25% by weight of bicomponent polyester fibres, which are carded together to obtain a web. A plurality of these webs is punched to give rise to a nonwoven fabric (4) having a grammage of 1000 g/m² and a thickness of 5.5 mm. The nonwoven fabric (4) is then subjected to a thermocompression moulding process using a temperature of between 120ºC and 180ºC, a pressure of between 5 bar and 10 bars, and a speed of between 0.5 m/min and 15 m/min, using for this purpose a lamination technology in a double-apron system. The nonwoven fabric is then subjected to a step of laminating with a polyester film.

As described in detail above, the polyester film (5) is optionally personalised with the desired motif, such as the logo of the company manufacturing the band or the company advertised on the printed polyester textile (2).

According to this embodiment, the nonwoven fabric (4) laminated with the polyester film (5) is cut into bands (1) having a width of 15 mm.

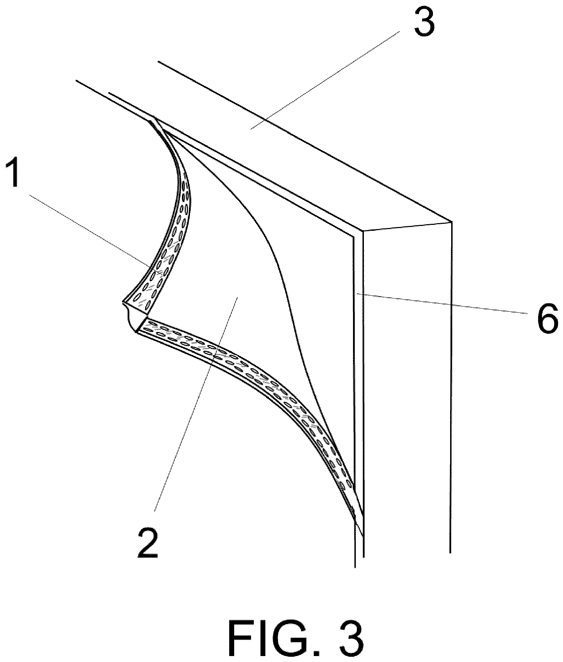

Finally, as can be seen in detail in Figures 2 and 3, the band (1) is attached to the polyester textile (2) which contains the printed motif by means of sewing with a polyester thread, such that the printed polyester textile (2) and the band (1) can be recycled together without having to separate these elements, since all these elements are of the same nature.

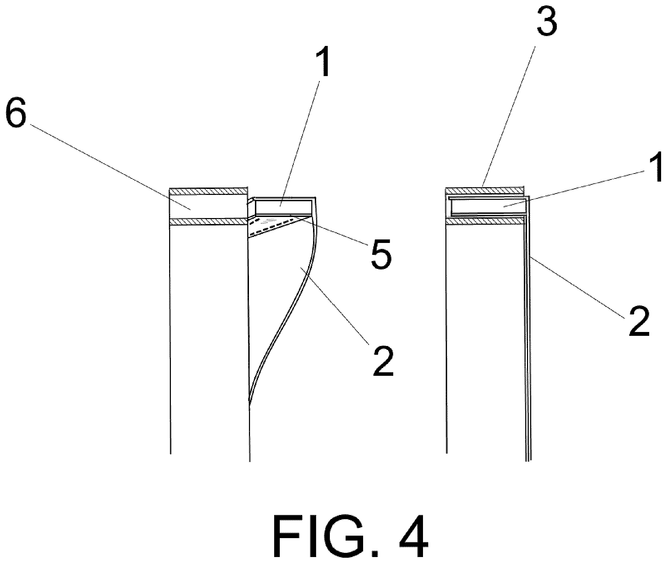

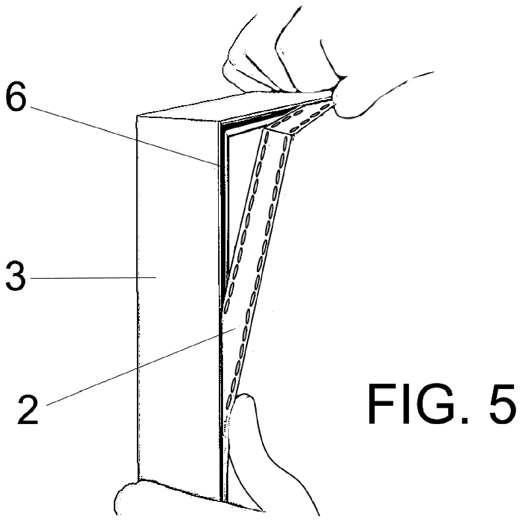

Once joined to the polyester textile (2), the band (1) together with the portion of the textile (2) joined thereto is introduced into a groove (6) provided in the frame (3), such that the textile (2) can be perfectly tautened on the frame (3), as can be seen in Figures 4 and 5. It should be mentioned that Figure 4 depicts a second embodiment of the invention in which the band (1) is laminated with a polyester film (5) only on one of the surfaces of the band (1).

Advantageously, the presence of the film (5) provides the required roughness and adherence so that the band (1) is adhered to the frame (3), with the textile (2) being properly stretched and attached.

Therefore, the band (1) of the invention offers means for linking a polyester textile (2) to a frame (3) which enables the joint management of waste and its reuse.

## Claims

1. A band (1) for joining a polyester textile (2) which is attached to a frame (3), **characterised in that** it comprises a needle-punched polyester nonwoven fabric (4) having a polyester film (5) on at least one of the surfaces of the band (1), such that the needle-punched nonwoven fabric (4) is made up of at least one web having a grammage of between 700 and 1000 g/m², and a thickness of between 3 mm and 5.5 mm, wherein the web is formed by polyester fibres and bicomponent polyester fibres, and wherein the bicomponent polyester fibres have a core and a shell which has a melting point less than that of the core, with the amount of bicomponent fibres present being between 2% and 50% of the total weight of the web.

2. The band (1) for joining a polyester textile (2) which is attached to a frame (3) according to claim 1, **characterised in that** the polyester fibres have a melting point of 260ºC.

3. The band (1) for joining a polyester textile (2) which is attached to a frame (3) according to claim 1, **characterised in that** the core of the bicomponent polyester fibres has a melting point of 150ºC, whereas the shell of the bicomponent polyester fibres has a melting point of 110ºC.

4. The band (1) for joining a polyester textile (2) which is attached to a frame (3) according to claim 1, **characterised in that** the polyester fibres making up the web have a length between 10 and 50 mm and a linear density between 2 and 7 dtex.

5. The band (1) for joining a polyester textile (2) which is attached to a frame (3) according to claim 1, **characterised in that** the bicomponent polyester fibres making up the web have a length between 38 and 64 mm and a linear density between 4 and 6 den.

6. The band (1) for joining a polyester textile (2) which is attached to a frame (3) according to claim 1, **characterised in that** 25% of the total weight of the web are bicomponent polyester fibres.

7. The band (1) for joining a polyester textile (2) which is attached to a frame (3) according to claim 1, **characterised in that** the nonwoven fabric (4) has a grammage of 1000 g/m² and a thickness of 5.5 mm.

8. The band (1) for joining a polyester textile (2) which is attached to a frame (3) according to claim 1, **characterised in that** it has a width of at least 15 mm.

9. The band (1) for joining a polyester textile (2) which is attached to a frame (3) according to claim 1, **characterised in that** the polyester film (5) has a grammage of between 10 and 200 g/m², a thickness of between 10 and 200 µm and an activation temperature of between 120ºC and 170ºC.

10. The band (1) for joining a polyester textile (2) which is attached to a frame (3) according to claim 1 or 9, **characterised in that** the polyester film (5) is personalised with a printed motif.

11. A method of manufacturing the band (1) according to claims 1 to 10, **characterised in that** it comprises the steps of:
- Carding the polyester fibres and bicomponent polyester fibres to obtain a web,
- Needle-punching at least one web of polyester fibres and bicomponent polyester fibres to obtain a nonwoven fabric (4),
- Moulding the nonwoven fabric (4) by thermocompression, using a temperature of between 120ºC and 180ºC, a pressure of between 5 bar and 10 bars, and a speed of between 0.5 m/min and 15 m/min,
- Laminating the nonwoven fabric (4) using a polyester film (5) which is arranged on at least one of the surfaces of the nonwoven fabric (4),
- Cutting the laminated nonwoven fabric (4) into bands (1).

12. The method of manufacturing according to claim 11, **characterised in that** moulding the nonwoven fabric (4) by thermocompression is performed by means of a lamination technology in a double-apron system.

13. The method of manufacturing according to claim 11, **characterised in that** it comprises a step of attaching the band (1) to a polyester textile (2) by means of sewing with a polyester thread or heat-sealing.

14. The method of manufacturing according to claim 11, **characterised in that** the polyester film (5) is personalised by means of printing with UV ink before laminating the nonwoven fabric (4) with the polyester film (5).

15. The method of manufacturing according to claim 11, **characterised in that** the polyester film (5) is personalised by means of transfer printing with polyester sublimation inks before laminating the nonwoven fabric (4) with the polyester film (5).

16. The method of manufacturing according to claim 15, **characterised in that** the steps of moulding by thermocompression, laminating, and transfer printing with sublimation inks of the polyester film (5) are performed simultaneously.

17. The method of manufacturing according to claim 11, **characterised in that** the nonwoven fabric (4) is cut by means of a cutter, by means of temperature cutting or by means of a process of unwinding and continuously cutting with blades.
